# EUROPÄISCHE PATENTSCHRIFT

(11) **EP 3 497 401 B1**
(45) Veröffentlichungstag und Bekanntmachung des Hinweises auf die Patenterteilung: **13.05.2020**
(21) Anmeldenummer: 17745281.0
(22) Anmeldetag: 13.07.2017
(51) Int. Cl.: G01B 7/14, G01B 17/00, F16N 29/00

(54) **VERFAHREN UND VORRICHTUNG ZUM VERMESSEN EINES SCHMIERSPALTES ZWISCHEN GESCHMIERTEN KONTAKTELEMENTEN**
METHOD ET APPARATUS FOR MEASURING A LUBRICATING GAP BETWEEN LUBRICATED CONTACT ELEMENTS
PROCÉDÉ ET APPAREIL PERMETTANT DE MESURER UN ESPACE DE LUBRIFICATION ENTRE DES ÉLÉMENTS DE CONTACT LUBRIFIÉS

(30) Priorität: 12.08.2016 DE 102016215099
(43) Veröffentlichungstag der Anmeldung: 19.06.2019
(73) Patentinhaber: ZF Friedrichshafen AG, 88046 Friedrichshafen (DE)
(72) Erfinder: TENCKHOFF, Georg, 88048 Friedrichshafen (DE)
(74) Vertreter: ZF Friedrichshafen AG
(86) Internationale Anmeldenummer: PCT/EP2017/067663
(87) Internationale Veröffentlichungsnummer: WO 2018/028920

(56) Entgegenhaltungen:
- EP-B1- 1 240 455
- GB-A- 2 501 165
- US-A1- 2004 045 356

## Beschreibung

Die Erfindung betrifft ein Verfahren und eine Vorrichtung zum Vermessen eines Schmierspaltes zwischen geschmierten Kontaktelementen.

Aus EP 1 240 455 B1 ist ein Verfahren zur Regelung einer Schmiermittelverteilung in einem Schmierspalt bekannt. Um die Schmierspaltbreite zu erfassen, werden Sensoren im Bereich des Schmierspalts angeordnet. Im Bereich des Schmierspaltes treten zwischen den Kontaktelementen mechanische Hochbelastungen auf. Sensorelemente sind nicht zuverlässig dauerfest anbringbar. Es besteht die Gefahr einer Beschädigung der Sensorelemente in Folge der mechanischen Belastungen.

US 2004/045356 A1 offenbart ein Verfahren und eine Vorrichtung zum Bestimmen der Dicke eines zwischen zwei Körpern angeordneten Schmiermittelfilms durch Messen und Durchführen einer Frequenzspektrumanalyse an einem reflektierten oder durchgelassenen Teil einer Ultraschallwelle, die sich in Richtung des Films ausbreitet.

Aus GB 2 501 165 A sind ein Verfahren bzw. eine Vorrichtung zum Erfassen einer oder mehrerer Grenzflächen in einem Fluidgemisch bekannt. Innerhalb des Gemisches ist eine vertikale Anordnung von TDR-Sensorkomponenten angeordnet, und jeder Sensor ist auf eine TDR-Sende- / Empfangsschaltung geschaltet. Die Signale von jedem Sensor in dem Array werden verarbeitet, um den Ort der Schnittstelle (n) zu identifizieren. Es wird ein Zeitbereichsreflektometriesensor (TDR-Sensor) beansprucht, der einen Träger mit einer gekrümmten Außenfläche und ein Paar im wesentlichen paralleler Leiter aufweist, die auf der gekrümmten Außenfläche angebracht sind, wobei die Leiter durch eine Isolierung getrennt sind.

Die Aufgabe der Erfindung besteht darin, ein Verfahren zum Vermessen eines Schmierspaltes zu verbessern, indem insbesondere zuverlässige Messergebnisse mit reduziertem Aufwand erzielt werden.

Zur Lösung dieser Aufgabe wird wird zunächst ein Verfahren mit den Merkmalen des Patentanspruchs 1 angegeben.

Erfindungsgemäß wurde erkannt, dass Kontaktelemente, die einen Schmierspalt begrenzen, jeweils als, insbesondere elektrische, Leitung interpretiert werden können. Dadurch ist möglich, Messverfahren, die aus dem Bereich der Leitungsvermessung bekannt sind, zum Vermessen des Schmierspaltes anzuwenden. Erfindungsgemäß wurde erkannt, dass mittels Reflektometrieverfahren die Kontaktelemente als Leitungen vermessen werden können, wobei Grenzflächen, an welchen ein mechanischer Kontakt mit dem jeweils anderen Kontaktelement vorliegt, als Störstellen im Sinne der Leitungsvermessung detektiert werden können. An diesen Störstellen werden sprunghafte Änderungen der elektrischen Impedanz im Kontaktelement registriert. Das Verfahren ist geeignet, um den Schmierspalt zwischen zwei oder mehr als zwei Kontaktelementen zu erfassen. Ein derartiger Schmierspalt kann in Getrieben zwischen ineinander eingreifenden Zahnrädern und/oder als Ganzkörperkontakt vorliegen. Das erfindungsgemäße Verfahren ermöglicht eine zuverlässige Vermessung des Schmierspalts im laufenden Betrieb, also insbesondere bei unter Last drehenden Getrieben. Insbesondere ist es möglich, Mangelschmierung zu detektieren, wenn direkter Metall-Metall-Kontakt zwischen den Kontaktelementen vorliegt. Dadurch, dass ein Vermessen des Schmierspaltes mittels Reflektometrie möglich ist, ist es entbehrlich, Sensorelemente im Bereich des Schmierspaltes und/oder unmittelbar am Schmierspalt anzuordnen. Sensorelemente und mechanisch weniger robuste Elemente einer Auswerteelektronik können räumlich entfernt vom Schmierspalt in einer mechanisch sicheren Umgebung angeordnet sein. Die Sensorelemente sind örtlich vom Schmierspalt entkoppelt. Bei der Reflektometrie wird ein Diagnose-Signal jeweils in die Kontaktelemente eingekoppelt. Insbesondere wird für jedes Kontaktelement ein Diagnose-Signal eingekoppelt, das an Störstellen reflektiert wird. Ein dadurch gebildetes Reflexions-Signal wird aus den Kontaktelementen ausgekoppelt und zusammen mit dem Diagnose-Signal in einer Auswerteeinheit ausgewertet. Der Schmierzustand wird auf Basis der ausgewerteten Signale bestimmt.

Ein Verfahren gemäß Anspruch 2 ermöglicht ein unkompliziertes und unmittelbares Auswerten der Signale. Insbesondere wird auch ein Transmissions-Signal berücksichtigt, also der Anteil des Diagnose-Signals, der unreflektiert durch das Kontaktelement geleitet wird.

Ein Verfahren gemäß Anspruch 3 ermöglicht einen unmittelbaren Rückschluss auf den Vergleich der Signale.

Die Nutzung eines elektrischen Anregungs-Signals als Diagnose-Signal ermöglicht eine besonders vorteilhafte Leitungsvermessung. Insbesondere können Verfahren für elektrische Leitungen wie Koaxialkabel genutzt werden.

Bei Weiterbildung des Verfahrens wird ein ausgewertetes Reflexions-Signal, insbesondere unmittelbar, als Impedanzänderung einer Grenzfläche zwischen den Kontaktelementen interpretiert. Die Grenzfläche entspricht einer Störstelle der Leitung.

Ein Diagnose-Signal in Form eines Puls-Signals und ein Reflexions-Signal in Form eines verzögerten Echo-Puls-Signals ermöglicht eine unkomplizierte und unmittelbare Vermessung des Schmierspalts. Das zugrundeliegende Verfahren ist die Zeitbereichsreflektometrie, die auch als Time Domain Reflectometry (TDR) bezeichnet wird. Ein Verfahren, bei welchem für das Auswerten als Zustandsgrößen Laufzeit und/oder Amplitude verwendet werden, wobei insbesondere ein Vergleichen der Zustandsgrößen das Ermitteln von Verzögerungszeiten, Amplitudenänderungen und/oder Vorzeichenwechsel umfasst, gewährleistet eine unkomplizierte und unmittelbare Auswertung der Zustandsgrößen.

Ein Verfahren zur Bestimmung eines Ohmschen Anteils einer Spaltimpedanz durch Auswerten von Mehrfachreflexionen ermöglicht Messergebnisse mit erhöhter Aussagekraft.

Bei einem Verfahren, bei welchem das Diagnose-Signal ein, insbesondere harmonisches oder komplexes, Frequenz-Signal und das Reflexions-Signal (24; 24d) ein Interferenz-Signal ist, kann die Frequenzbereichsreflektometrie, die auch als Frequency Domain Reflectometry (FDR) bekannt ist, genutzt werden.

Ein Verfahren, welches für das Auswerten als Zustandsgrößen Interferenzmuster aus Diagnose-Signal, Reflexions-Signal und/oder Transmissions-Signal umfasst, ermöglicht die Auswertung der Zustandsgrößen eine verbesserte Ortsauslösung von Störstellen.

Ein Verfahren, bei welchem das Einkoppeln kontaktlos erfolgt, insbesondere durch kapazitive, induktive oder elektromagnetische Signalübertragung, gewährleistet ein unkompliziertes und vereinfachtes Einkoppeln der Diagnose-Signale in die Kontaktelemente.

Ein Verfahren, bei welchem ein Einkoppel-Reflexions-Signal als Trigger-Signal für die Reflexions-Signale aus den Kontaktelementen verwendet wird, erweitert die Funktionalität bezüglich der Messauswertung.

Ein Verfahren, welches durch eine Korrelationsanalyse, insbesondere einem Phase-Locked-Loop-Verfahren (PLL), gekennzeichnet ist, ermöglicht Messergebnisse mit reduziertem Störanteil. Es ist möglich, eine Signalidentifikation zu erhöhen und insbesondere eine Unterscheidung zwischen Signal und Rauschen zu verbessern. Die gemessenen Signale können insbesondere fehlerunanfällig ausgewertet werden.

Zur Lösung der Aufgabe wird außerdem eine Vorrichtung mit den Merkmalen des Patentanspruchs 13 angegeben.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine schematische Darstellung eines Getriebes mit Kontaktelementen und jeweils dazwischen angeordneten Schmierspalten.
- Fig. 2: eine perspektivische Ansicht von Kontaktelementen mit der Einkoppelvorrichtung gemäß einem ersten Ausführungsbeispiel,
- Fig. 3: eine schematische Darstellung eines Signalschemas für ein Verfahren zum Vermessen eines Schmierspaltes gemäß einer ersten Ausführungsform mittels TDR,
- Fig. 4: eine Fig. 2 entsprechende Darstellung einer Einkopplungs-Vorrichtung gemäß einem zweiten Ausführungsbeispiel,
- Fig. 5: eine Fig. 2 entsprechende Darstellung einer Einkopplungs-Vorrichtung gemäß einem dritten Ausführungsbeispiel,
- Fig. 6: eine Fig. 2 entsprechende Darstellung einer Einkopplungs-Vorrichtung gemäß einem vierten Ausführungsbeispiel und
- Fig. 7: eine Fig. 3 entsprechende Darstellung eines Signalschemas gemäß einem Verfahren gemäß einem weiteren Ausführungsbeispiel gemäß FDR.

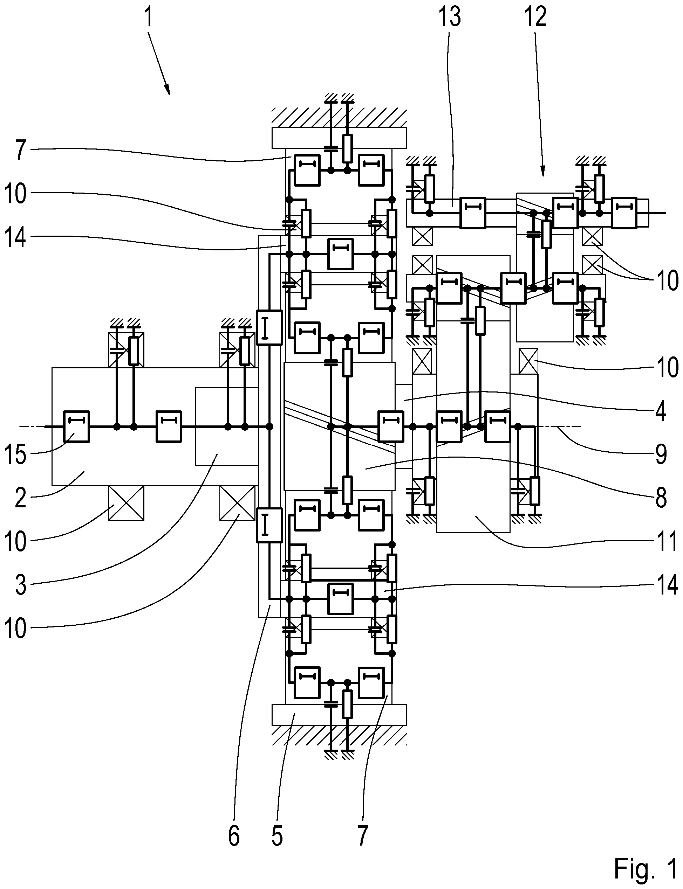

Ein in Fig. 1 schematisch dargestelltes Planetengetriebe 1 weist eine Hohlrad-Hohlwelle 2, eine Planetenradträgerwelle 3 und eine Sonnenradwelle 4 auf. Die Hohlrad-Hohlwelle 2 ist mit einem innenverzahnten Hohlrad 5 verbunden. Die Planetenradträgerwelle 3 ist mit dem Planetenradträger 6 verbunden. Der Planetenradträger 6 trägt mehrere außenverzahnte Planetenräder 7, die mit der Innenverzahnung des Hohlrads 5 und mit einem konzentrisch angeordneten Sonnenrad 8 in Eingriff stehen. Das Sonnenrad 8 ist mit der Sonnenradwelle 4 verbunden. Das Sonnenrad 8 ist konzentrisch zu einer Längsachse 9 des Getriebes 1 angeordnet. Die Planetenräder 7 sind exzentrisch zur Längsachse 9 angeordnet. Eine Drehung des Planetenradträgers 6 bewirkt eine Verlagerung der Planetenräder 7 auf einer Kreisbahn um die Längsachse 9.

Die Hohlrad-Hohlwelle 2 und die Planetenradträgerwelle 3 sind konzentrisch zur Längsachse 9 angeordnet. Die Hohlrad-Hohlwelle 2 umgreift die Planetenradträgerwelle 3 zumindest bereichsweise entlang der Längsachse 9.

Die Hohlrad-Hohlwelle 2 und die Sonnenradwelle 4 sind jeweils über geeignete Lagerungen 10 an einem nicht dargestellten Getriebegehäuse gelagert.

An der Sonnenradwelle 4 ist ein Abtriebszahnrad 11 angeordnet, das über zwei weitere Zahnradstufen 12 auf eine Ausgangswelle 13 führt.

Die Ausgangswelle 13 und die die Getriebestufe 12 tragende Welle sind ebenfalls mit Lagerungen 10 im Getriebegehäuse gelagert. Die Planetenräder 7 sind auf Drehzapfen 14 des Planetenradträgers 6 mittels Lagerungen 10 drehbar gelagert.

Die mechanischen Komponenten des Planetengetriebes 1 sind aus Metall hergestellt. Die metallischen Komponenten können als elektrische Leiter interpretiert und mit Diagnose-Signalen beaufschlagt werden. Ein Diagnose-Signal ist beispielsweise ein elektrisches Signal. Der elektrische Stromfluss durch die mechanischen Elemente des Planetengetriebes 1 ist in Fig. 1 durch ein Schaltsymbol 15 dargestellt. Im Bereich eines Kontaktpaares, also beispielsweise im Bereich des Kontakts zwischen der Hohlrad-Hohlwelle 2 und der Lagerung 10, sind jeweils ein Kondensator 16 und ein Widerstand 17 vorgesehen. Das Schaltbild des Kondensators 16 und das Schaltbild des elektrischen Widerstands 17 symbolisieren kapazitive bzw. Ohm'sche Anteile einer möglichen Spalt-Impedanz, die nachfolgend noch erläutert wird.

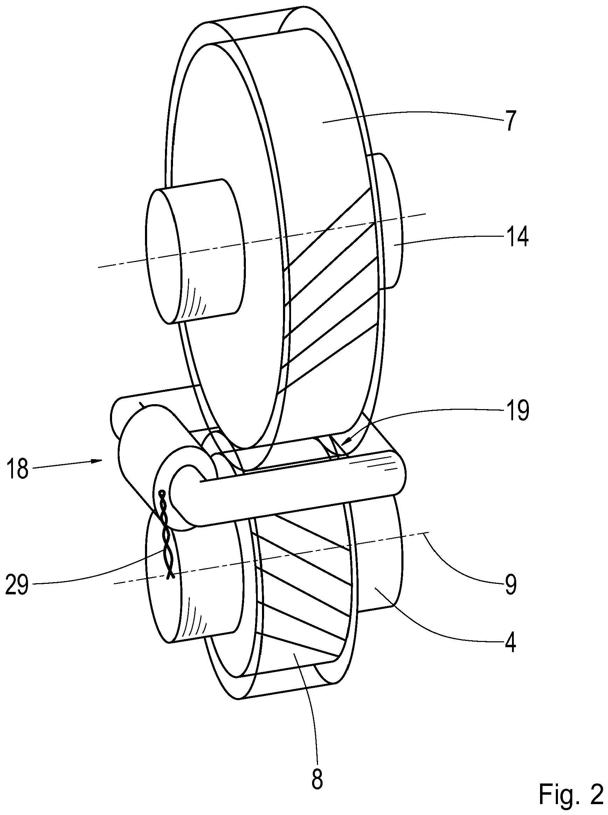

Nachfolgend wird anhand der Fig. 2 näher erläutert, wie das Diagnose-Signal im Bereich eines Kontaktpaares mittels einer Einkopplung-Vorrichtung 18 eingekoppelt wird. Gemäß dem gezeigten Ausführungsbeispiel besteht das Kontaktpaar zwischen dem unten angeordneten Sonnenrad 8, das an der Sonnenradwelle 4 befestigt und um die Längsachse 9 drehbar ist. Das Sonnenrad 8 ist außenverzahnt und steht in Eingriff mit einem der Planetenräder 7, das an dem Drehzapfen 14 des nicht dargestellten Planetenradträgers gehalten ist. In dem Kontaktbereich zwischen dem Planetenrad 7 und dem Sonnenrad 8 wird ein Schmierspalt 19 gebildet, der mit Schmiermittel beaufschlagt ist.

Die Einkopplungs-Vorrichtung 18 ist als Ringtransformator ausgeführt, wobei die ringförmige Fläche des Ringtransformators in der Schmierspaltebene angeordnet ist. Neben der in Fig. 2 gezeigten Darstellung der Einkopplungs-Vorrichtung 18 mit einem als Ringtransformator ausgeführten Einkopplungselement können alternativ auch mehrere Einkopplungselemente vorgesehen werden. Die Schmierspaltebene ist insbesondere senkrecht zu einer von den Drehachsen des Planetenrads 7 und des Sonnenrads 8 definierten Ebene angeordnet. Der gemeinsame Ringtransformator für die Kontaktelemente 7, 8 ist in einem Bereich zwischen den Kontaktelementen 7, 8 angeordnet.

Die Einkopplungs-Vorrichtung 18 ist besonders unkompliziert und unaufwändig ausgeführt. Die Einkopplungs-Vorrichtung 18 ermöglicht es, ein und dasselbe Diagnose-Signal in beide Kontaktelemente 7, 8 einzukoppeln. Insbesondere ist es möglich, mit nur einem Einkopplungselement mehrere Kontaktelemente mit dem Diagnose-Signal zu beaufschlagen. Die Einkopplungs-Vorrichtung 18 ist mit elektrischen Leitungen 29 zur Einkopplung des elektrischen Diagnose-Signals 21 ausgeführt.

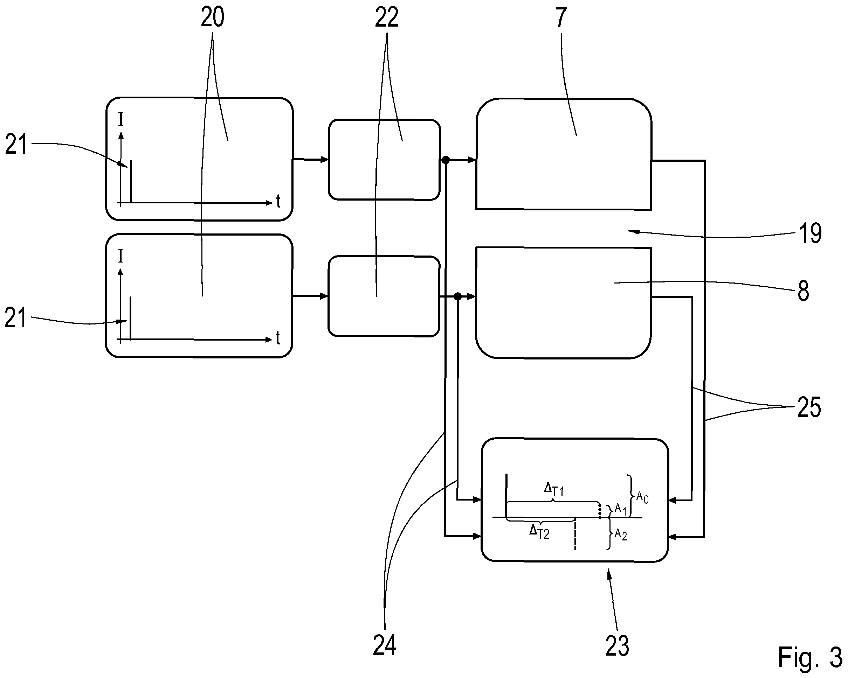

Nachfolgend wird anhand von Fig. 3 eine Ausführungsform des Verfahrens zum Vermessen des Schmierspaltes 19 näher erläutert. In Fig. 3 ist das Kontaktpaar aus Planetenrad 7 und Sonnenrad 8 schematisch dargestellt. Die beiden Kontaktelemente 7 werden jeweils von einem Impulsgenerator 20 mit einem Diagnose-Signal 21 in Form eines Stromimpulses beaufschlagt. Das verwendete Diagnose-Signal 21 in Form des Puls-Signals dient zur Anwendung der TDR. Vorteilhaft ist es, wenn die Pulssignale sich für das Planetenrad 7 und das Sonnenrad 8 jeweils voneinander unterscheiden. Es ist aber auch möglich, dass identische Pulssignale als Diagnose-Signale eingekoppelt werden.

Die Diagnose-Signale 21 werden über jeweils eine Impedanz-Anpassungs-Vorrichtung 22 geführt und mittels der nicht dargestellten Einkopplungs-Vorrichtung 18 in das Planetenrad 7 und das Sonnenrad 8 eingekoppelt. Idealerweise liegt im Bereich des Schmierspalts 19 zwischen den Kontaktelementen 7, 8 kein metallischer Kontakt vor. In diesem Fall würden die Diagnose-Signale ideal unreflektiert durch die Kontaktelemente 7, 8 durchgeleitet werden. Die durchgeleiteten Diagnose-Signale sind Transmissionssignale 25 und werden einer Auswerteeinheit 23 zugeführt. Ebenfalls der Auswerteeinheit 23 zugeführt werden Reflexions-Signale 24. Die Reflexions-Signale 24 stammen von Störstellen in Form von Grenzflächenkontakten zwischen den Kontaktelementen 7, 8. An diesen Grenzflächenkontakten wird das eingekoppelte Diagnose-Signal 21 teilweise reflektiert. Das Reflexions-Signal 24 wird als verzögerter Echo-Puls in der Auswerteeinheit verarbeitet. Insbesondere werden Laufzeiten und Amplituden der Diagnose-Signale und/oder der Reflexions-Signale 24 im Vergleich zu den Transmissions-Signalen 25 ausgewertet. Die Auswertung der Signale 21, 24 und 25 beruht auf den Messgrößen der Verzögerungszeiten, der Amplitudenänderungen und der Vorzeichenänderungen der Amplituden. Daraus kann eine Impedanzänderung an den Grenzflächen, also den Schmierspalten des Planetengetriebes 1, insbesondere der beteiligten Kontaktelemente 7, 8 berechnet werden. Zusätzlich können Mehrfachreflexionen bzw. deren Abklingen berücksichtigt werden, um Rückschlüsse auf den Ohm'schen Anteil, der durch das Widerstand-Schaltsignal 17 repräsentiert ist, rückzuschließen.

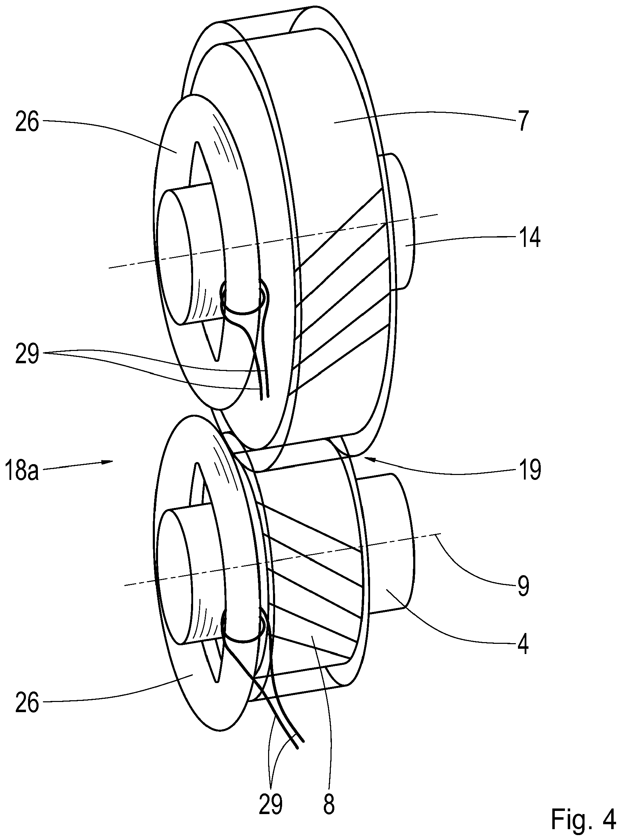

Im Folgenden wird unter Bezugnahme auf Fig. 4 eine weitere Ausführungsform der Einkopplungs-Vorrichtung beschrieben. Konstruktiv identische Teile erhalten dieselben Bezugszeichen wie bei der ersten Ausführungsform, auf deren Beschreibung hiermit verwiesen wird. Konstruktiv unterschiedliche, jedoch funktionell gleichartige Teile erhalten dieselben Bezugszeichen mit einem nachgestellten a.

Die Einkopplungsvorrichtung 18a gemäß Fig. 4 weist zwei Ringtransformatoren 26 auf, die jeweils einem der Kontaktelemente 7, 8 zugeordnet sind. Die Ringtransformatoren 26 sind kreisförmig ausgeführt und konzentrisch zur jeweiligen Drehachse des Kontaktelements angeordnet. Die Ringtransformatoren 26 sind jeweils an den Wellen der Kontaktelemente 7, 8 angeordnet.

Vorteilhaft bei der Ausführung der Einkopplungsvorrichtung 18a mit zwei separaten Ringtransformatoren 26 ist die Variabilität bei der Einkopplung. Insbesondere ist es möglich, dass voneinander abweichende Diagnose-Signale 21 in die Kontaktelemente 7 und 8 eingekoppelt werden.

Die Ringtransformatoren 26 sind jeweils in Form eines Torus ausgeführt.

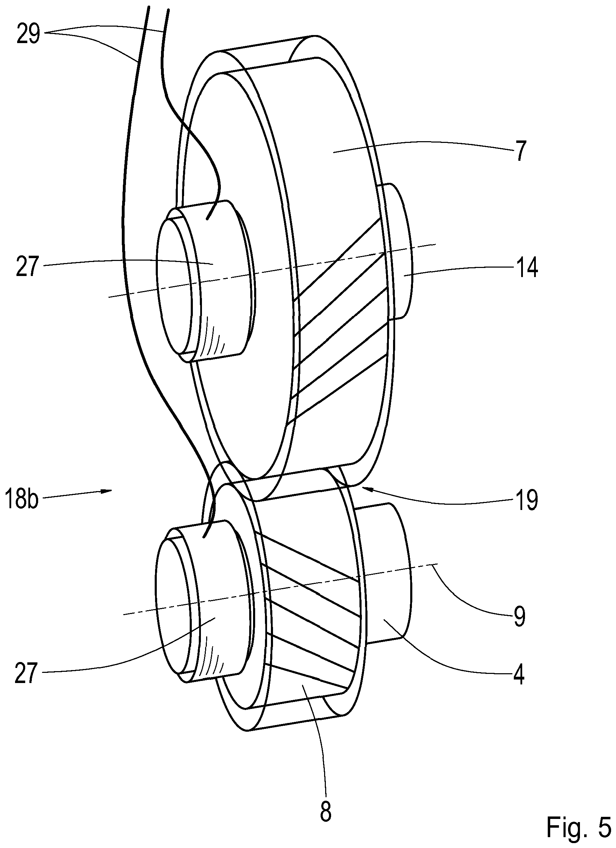

Im Folgenden wird unter Bezugnahme auf Fig. 5 eine weitere Ausführungsform der Erfindung beschrieben. Konstruktiv identische Teile erhalten dieselben Bezugszeichen wie bei den beiden ersten Ausführungsformen, auf deren Beschreibung hiermit verwiesen wird. Konstruktiv unterschiedliche, jedoch funktionell gleichartige Teile erhalten dieselben Bezugszeichen mit einem nachgestellten b.

Bei der Einkopplungs-Vorrichtung 18b sind auch zwei separate Ringkondensatoren 27 vorgesehen, die in Form eines umlaufenden Bandes jeweils an der Sonnenradwelle 4 bzw. dem Drehzapfen 14 umgelegt sind. Dadurch ist eine besonders kompakte und robuste Anordnung des Ringkondensators 27 an dem Kontaktelement möglich. Die Einkopplung ist dadurch verbessert.

Ein weiterer Unterschied gegenüber den vorherigen Ausführungsformen besteht darin, dass die Einkopplungs-Vorrichtung 18b zwei Ringkondensatoren 27 aufweist.

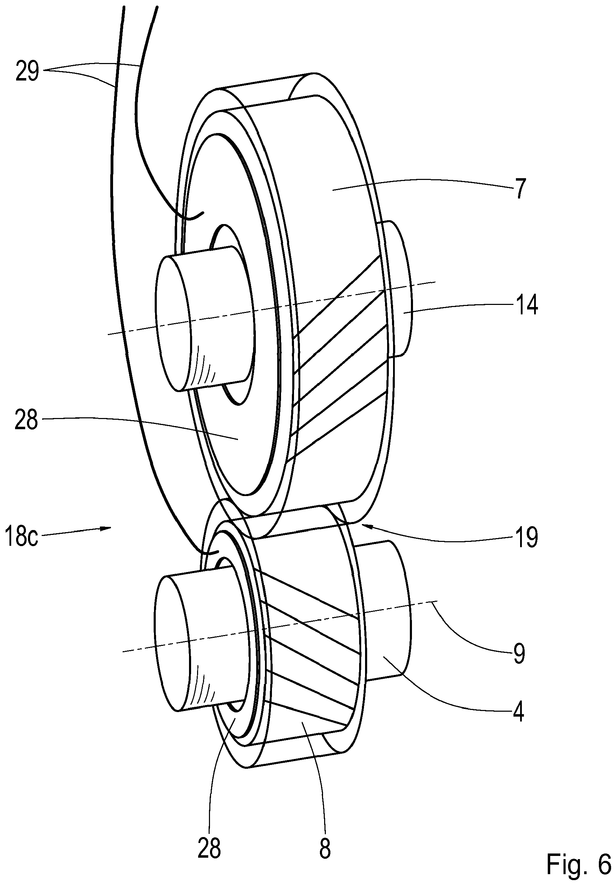

Im Folgenden wird unter Bezugnahme auf Fig. 6 eine weitere Ausführungsform der Erfindung beschrieben. Konstruktiv identische Teile erhalten dieselben Bezugszeichen wie bei den vorherigen Ausführungsformen, auf deren Beschreibung hiermit verwiesen wird. Konstruktiv unterschiedliche, jedoch funktionell gleichartige Teile erhalten dieselben Bezugszeichen mit einem nachgestellten c.

Bei der Einkopplungsvorrichtung 18c sind zwei Plattenkondensatoren 28 vorgesehen, die jeweils ringscheibenförmig ausgeführt und stirnseitig an den Zahnrädern 7, 8 angeordnet sind. Dadurch ist eine unmittelbare Einkopplung des Diagnose-Signals 21 in die Kontaktelemente möglich. Die Einkopplungsbedingungen sind dadurch verbessert.

Der wesentliche Unterschied gegenüber den vorherigen Ausführungsbeispiel besteht darin, dass die Kondensatoren als Plattenkondensatoren 28 ausgeführt sind, die stirnseitig zu den Kontaktelementen 7, 8 angeordnet sind.

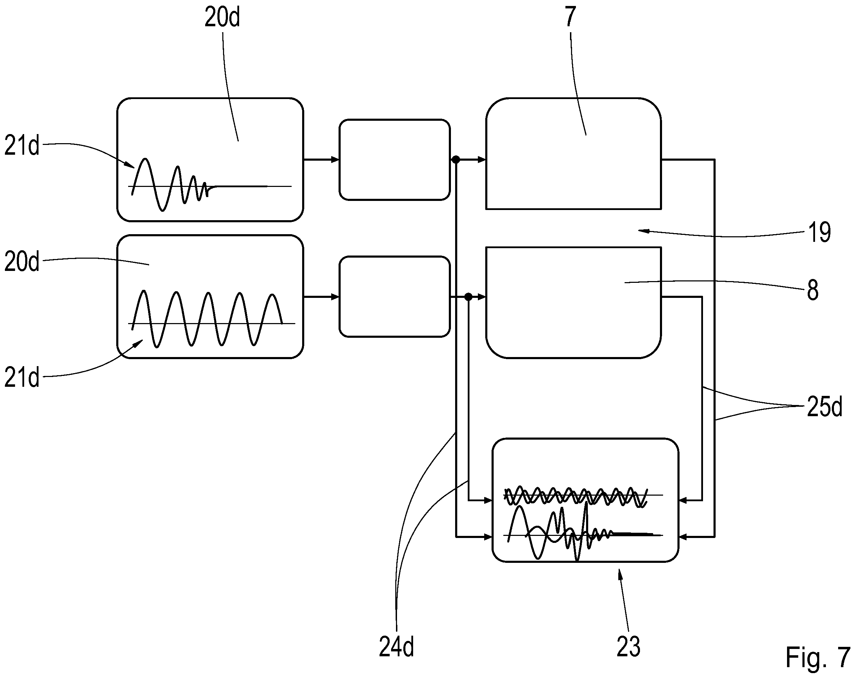

Nachfolgend wird unter Bezugnahme auf Fig. 7 eine weitere Ausführungsform des Verfahrens zum Vermessen des Schmierspaltes 19 näher erläutert. Das Verfahren ist das FDR, bei dem das Diagnose-Signal 21 d ein Frequenzsignal und das Reflexions-Signal 24d ein Interferenzsignal ist. Aus der Auswertung des Interferenzsignals lassen sich, wie auch aus der Auswertung des Echopulses 24d Rückschlüsse auf Ort, Art, beispielsweise resistiv oder kapazitiv, und Ausprägung des Kontaktspaltes ziehen.

Entsprechend sind die Impulsgeneratoren 20d Generatoren zur Erzeugung eines Frequenzsignals. Das erzeugte Frequenzsignal ist ein Diagnose-Signal 21d.

Gemäß einem weiteren nicht figürlich dargestellten Ausführungsbeispiel eines Verfahrens kann als Diagnose-Signal ein akustisches Signal in Form von Ultraschall verwendet werden. Insbesondere können elektrische und elektromagnetische Pulse oder Frequenzsignale durch die akustischen Signale ergänzt werden. Es ist also denkbar, Diagnose-Signale in elektrischer und/oder akustischer Form zu verwenden. Es ist möglich, magneto- bzw. elektrostriktive Materialien, insbesondere Aktuatoren, zu verwenden, die insbesondere nicht im Bereich des Reib-/Schmierkontakts, also im Bereich des Schmierspaltes 19, angeordnet sein müssen, um akustische und elektrische Diagnose-Signale in Kombination auswerten zu können. Es ergeben sich verschiedene Möglichkeiten zum Ein- und Auskoppeln der Signale, insbesondere eine elektrische Einkopplung und eine akustische Auskopplung. Aufgrund der reduzierten Ausbreitungsgeschwindigkeit von Schallwellen in den betroffenen Materialien, nämlich Metall, insbesondere Stahl, Öl und/oder Luft gegenüber elektromagnetischen Wellen, ist es möglich, die Auflösung beider Grenzflächen im Schmierspalt 19, also Stahl-Öl-Stahl, aufzulösen.

### Bezugszeichen

- 1: Planetengetriebe
- 2: Hohlrad-Hohlwelle
- 3: Planetenradträgerwelle
- 4: Sonnenradwelle
- 5: Hohlrad
- 6: Planetenradträger
- 7: Planetenrad
- 8: Sonnenrad
- 9: Längsachse
- 10: Lagerung
- 11: Abtriebszahnrad
- 12: Zahnradstufe
- 13: Ausgangswelle
- 14: Drehzapfen
- 15: Schaltsymbol
- 16: Kondensator
- 17: Widerstand
- 18, 18a, 18b, 18c: Einkopplungs-Vorrichtung
- 19: Schmierspalt
- 20,20d: Impulsgenerator
- 21,21d: Diagnosesignal
- 22: Impedanz-Anpassungs-Vorrichtung
- 23: Auswerteeinheit
- 24,24d: Reflexions-Signal
- 25,25d: Transmissions-Signal
- 26: Ringtransformator
- 27: Ringkondensator
- 28: Plattenkondensator
- 29: elektrische Leitung

## Patentansprüche

1. Verfahren zum Vermessen eines Schmierspaltes zwischen geschmierten Kontaktelementen umfassend die Verfahrensschritte
- Bereitstellen der Kontaktelemente (2,10; 3,10; 14, 10; 7, 10; 7, 5, 13, 10; 8, 10) mit einem dazwischen angeordneten Schmierspalt (19),
- Einkoppeln jeweils eines Diagnose-Signals (21 ;21d) in die Kontaktelemente (2, 10; 3, 10; 14, 10; 7,10; 7, 5, 13, 10; 8, 10), wobei das Diagnose-Signal (21; 21d) ein elektrisches Anregungs-Signal ist,
- Auskoppeln mindestens eines Reflexions-Signals (24;24d) aus den Kontaktelementen (2, 10; 3,10; 14, 10; 7, 10; 7, 5, 13, 10; 8, 10),
- Auswerten des Diagnose-Signals (21; 21 d) und des Reflexions-Signals (24; 24d) mittels einer Auswerteeinheit (23), wobei eine Impedanzänderung an den Grenzflächen der Kontaktelemente (2,10; 3, 10; 14, 10; 7, 10; 7, 5, 13, 10; 8, 10) anhand von Verzögerungszeiten, Amplitudenänderungen und Vorzeichenänderungen der Amplituden der Signale (21; 21d; 24; 24d) berechnet wird, und
- Bestimmen des Schmierzustands aus den ausgewerteten Signalen (21; 21d; 24; 24d).

2. Verfahren gemäß Anspruch 1, **dadurch gekennzeichnet, dass** das Auswerten das Messen von Zustandsgrößen des Diagnose-Signals (21; 21d), des Reflexions-Signals (24; 24d) und/oder eines Transmissions-Signals (25; 25d) umfasst.

3. Verfahren gemäß Anspruch 2, **dadurch gekennzeichnet, dass** das Auswerten ein Vergleichen der Zustandsgrößen der Signale (21; 21d; 24; 24d; 25; 25d) umfasst.

4. Verfahren gemäß einem der vorherigen Ansprüche, **gekennzeichnet durch** ein Interpretieren des ausgewerteten Reflexions-Signals (24; 24d) als Impedanzänderung an Grenzflächen der Kontaktelemente (2, 10; 3, 10; 14, 10; 7, 10; 7, 5, 13, 10; 8, 10).

5. Verfahren gemäß einem der vorstehenden Ansprüche, **dadurch gekennzeichnet, dass** das Diagnose-Signal (21; 21d) ein Puls-Signal und das Reflexions-Signal (24; 24d) ein verzögertes Echo-Puls-Signal ist.

6. Verfahren gemäß Anspruch 5, **dadurch gekennzeichnet, dass** für das Auswerten als Zustandsgrößen Laufzeit und/oder Amplitude verwendet werden, wobei insbesondere ein Vergleichen der Zustandsgrößen das Ermitteln von Verzögerungszeiten, Amplitudenänderungen und/oder Vorzeichenwechsel umfasst.

7. Verfahren gemäß Anspruch 5 oder 6, **dadurch gekennzeichnet, dass** eine Bestimmung eines Ohmschen Anteils einer Spaltimpedanz durch Auswerten von Mehrfachreflexionen erfolgt.

8. Verfahren gemäß einem der vorstehenden Ansprüche , **dadurch gekennzeichnet, dass** das Diagnose-Signal (21; 21d) ein, insbesondere harmonisches oder komplexes, Frequenz-Signal und das Reflexions-Signal (24; 24d) ein Interferenz-Signal ist.

9. Verfahren gemäß Anspruch 8, **dadurch gekennzeichnet, dass** für das Auswerten als Zustandsgrößen Interferenzmuster aus Diagnose-Signal (21; 21d), Reflexions-Signal (24; 24d) und/oder Transmissions-Signal (25; 25d) umfasst.

10. Verfahren gemäß einem der vorstehenden Ansprüche, **dadurch gekennzeichnet, dass** das Einkoppeln kontaktlos erfolgt, insbesondere durch kapazitive, induktive oder elektromagnetische Signalübertragung.

11. Verfahren gemäß einem der vorstehenden Ansprüche, **dadurch gekennzeichnet, dass** ein Einkoppel-Reflexions-Signal als Trigger-Signal für die Reflexions-Signale (24; 24d) aus den Kontaktelementen (2, 10; 3, 10; 14, 10; 7, 10; 7, 5, 13, 10; 8, 10) verwendet wird.

12. Verfahren gemäß einem der vorstehenden Ansprüche, **gekennzeichnet durch** eine Korrelationsanalyse, insbesondere einem Phase-Locked-Loop-Verfahren.

13. Einkoppelungs-Vorrichtung (18; 18a; 18b; 18c) zum Vermessen eines Schmierspaltes (19) zwischen geschmierten Kontaktelementen (2, 10; 3, 10; 14, 10; 7, 10; 7, 5, 13, 10; 8, 10), wobei die Einkoppelungs-Vorrichtung (18; 18a; 18b; 18c) wenigstens ein Einkopplungselement, einen Impulsgenerator (21; 21 d), eine Impedanz-Anpassungs-Vorrichtung (22) und eine Auswerteeinheit (23) aufweist, wobei durch das Einkopplungselement ein elektrisches Signal zum Vermessen eines Schmierspaltes zwischen geschmierten Kontaktelementen (2, 10; 3, 10; 14,10; 7, 10; 7, 5, 13, 10; 8, 10) einkoppelbar ist und die Einkoppelungs-Vorrichtung (18; 18a; 18b; 18c) dazu eingerichtet ist, ein Verfahren nach einem der Ansprüche 1 bis 12 auszuführen.

## Claims

1. Method for measuring a lubricating gap between lubricated contact elements, comprising the method steps of
- providing the contact elements (2, 10; 3, 10; 14, 10; 7, 10; 7, 5, 13, 10; 8, 10) with a lubricating gap (19) arranged between them,
- coupling a respective diagnostic signal (21; 21d) into the contact elements (2, 10; 3, 10; 14, 10; 7, 10; 7, 5, 13, 10; 8, 10), wherein the diagnostic signal (21; 21d) is an electrical excitation signal,
- coupling at least one reflection signal (24; 24d) out of the contact elements (2, 10; 3, 10; 14, 10; 7, 10; 7, 5, 13, 10; 8, 10),
- evaluating the diagnostic signal (21; 21d) and the reflection signal (24; 24d) by way of an evaluation unit (23), wherein a change in impedance at the boundary surfaces of the contact elements (2, 10; 3, 10; 14, 10; 7, 10; 7, 5, 13, 10; 8, 10) is calculated on the basis of delay times, changes in amplitude and changes in sign of the amplitudes of the signals (21; 21d; 24; 24d), and
- determining the lubricated state from the evaluated signals (21; 21d; 24; 24d) .

2. Method according to Claim 1, **characterized in that** the evaluation comprises measuring state variables of the diagnostic signal (21; 21d), of the reflection signal (24; 24d) and/or of a transmission signal (25; 25d).

3. Method according to Claim 2, **characterized in that** the evaluation comprises comparing the state variables of the signals (21; 21d; 24; 24d; 25; 25d).

4. Method according to one of the preceding claims, **characterized by** interpreting the evaluated reflection signal (24; 24d) as a change in impedance at boundary surfaces of the contact elements (2, 10; 3, 10; 14, 10; 7, 10; 7, 5, 13, 10; 8, 10).

5. Method according to one of the preceding claims, **characterized in that** the diagnostic signal (21; 21d) is a pulse signal and the reflection signal (24; 24d) is a delayed echo pulse signal.

6. Method according to Claim 5, **characterized in that** propagation time and/or amplitude are used as state variables for the evaluation, wherein comparing the state variables in particular comprises determining delay times, changes in amplitude and/or a change of sign.

7. Method according to Claim 5 or 6, **characterized in that** a resistive component of a gap impedance is determined by evaluating multiple reflections.

8. Method according to one of the preceding claims, **characterized in that** the diagnostic signal (21; 21d) is an in particular harmonic or complex frequency signal and the reflection signal (24; 24d) is an interference signal.

9. Method according to Claim 8, **characterized in that** it comprises interference patterns consisting of diagnostic signal (21; 21d), reflection signal (24; 24d) and/or transmission signal (25; 25d) as state variables for the evaluation.

10. Method according to one of the preceding claims, **characterized in that** the coupling-in takes place contactlessly, in particular through capacitive, inductive or electromagnetic signal transmission.

11. Method according to one of the preceding claims, **characterized in that** a coupling-in reflection signal is used as trigger signal for the reflection signals (24; 24d) from the contact elements (2, 10; 3, 10; 14, 10; 7, 10; 7, 5, 13, 10; 8, 10).

12. Method according to one of the preceding claims, **characterized by** correlation analysis, in particular a phase-locked loop method.

13. Coupling-in device (18; 18a, 18b; 18c) for measuring a lubricating gap (19) between lubricated contact elements (2, 10; 3, 10; 14, 10; 7, 10; 7, 5, 13, 10; 8, 10), wherein the coupling-in device (18; 18a; 18b; 18c) has at least one coupling-in element, a pulse generator (21; 21d), an impedance matching device (22) and an evaluation unit (23), wherein an electrical signal for measuring a lubricating gap between lubricated contact elements (2, 10; 3, 10; 14, 10; 7, 10; 7, 5, 13, 10; 8, 10) is able to be coupled in by the coupling-in element and the coupling-in device (18; 18a; 18b; 18c) is configured so as to carry out a method according to one of Claims 1 to 12.

## Revendications

1. Procédé de mesure d'un interstice de lubrification entre des éléments de contact lubrifiés, comprenant les étapes suivantes
- fourniture des éléments de contact (2, 10 ; 3, 10 ; 14, 10 ; 7, 10 ; 7, 5, 13, 10 ; 8, 10) entre lesquels est disposé un interstice de lubrification (19),
- injection respectivement d'un signal de diagnostic (21 ; 21d) dans les éléments de contact (2, 10 ; 3, 10 ; 14, 10 ; 7, 10 ; 7, 5, 13, 10 ; 8, 10), le signal de diagnostic (21 ; 21d) étant un signal d'excitation électrique,
- extraction d'au moins un signal de réflexion (24 ; 24d) des éléments de contact (2, 10 ; 3, 10 ; 14, 10 ; 7, 10 ; 7, 5, 13, 10 ; 8, 10),
- évaluation du signal de diagnostic (21 ; 21d) et du signal de réflexion (24 ; 24d) au moyen d'une unité d'évaluation (23), une variation de l'impédance au niveau des interfaces des éléments de contact (2, 10 ; 3, 10 ; 14, 10 ; 7, 10 ; 7, 5, 13, 10 ; 8, 10) étant calculée à l'aide de temps de retard, de variations d'amplitude et de changements de signe des amplitudes des signaux (21 ; 21d ; 24 ; 24d), et
- détermination de l'état de lubrification à partir des signaux (21 ; 21d ; 24 ; 24d) évalués.

2. Procédé selon la revendication 1, **caractérisé en ce que** l'évaluation comprend la mesure des grandeurs d'état du signal de diagnostic (21 ; 21d), du signal de réflexion (24 ; 24d) et/ou d'un signal de transmission (25 ; 25d) .

3. Procédé selon la revendication 2, **caractérisé en ce que** l'évaluation comprend une comparaison des grandeurs d'état des signaux (21 ; 21d ; 24 ; 24d ; 25 ; 25d).

4. Procédé selon l'une des revendications précédentes, **caractérisé par** une interprétation du signal de réflexion (24 ; 24d) évalué en tant que variation de l'impédance au niveau des interfaces des éléments de contact (2, 10 ; 3, 10 ; 14, 10 ; 7, 10 ; 7, 5, 13, 10 ; 8, 10).

5. Procédé selon l'une des revendications précédentes, **caractérisé en ce que** le signal de diagnostic (21 ; 21d) est un signal puisé et le signal de réflexion (24 ; 24d) un signal puisé d'écho.

6. Procédé selon la revendication 5, **caractérisé en ce que** le temps de propagation et/ou l'amplitude sont utilisés en tant que grandeurs d'état pour l'évaluation, une comparaison des grandeurs d'état comprenant notamment l'identification de temps de retard, de variation d'amplitude et/ou de changement de signe.

7. Procédé selon la revendication 5 ou 6, **caractérisé en ce qu'**une détermination d'une part ohmique d'une impédance d'interstice est effectuée par évaluation de réflexions multiples.

8. Procédé selon l'une des revendications précédentes, **caractérisé en ce que** le signal de diagnostic (21 ; 21d) est un signal de fréquence, notamment harmonique ou complexe, et le signal de réflexion (24 ; 24d) est un signal d'interférence.

9. Procédé selon la revendication 8, **caractérisé en ce que** pour l'évaluation, il comprend en tant que grandeurs d'état un modèle d'interférence composé du signal de diagnostic (21 ; 21d), du signal de réflexion (24 ; 24d) et/ou du signal de transmission (25 ; 25d).

10. Procédé selon l'une des revendications précédentes, **caractérisé en ce que** l'injection, s'effectue sans contact, notamment par transmission de signal capacitive, inductive ou électromagnétique.

11. Procédé selon l'une des revendications précédentes, **caractérisé en ce qu'**un signal de réflexion d'injection est utilisé comme signal de déclenchement pour le signal de réflexion (24 ; 24d) provenant des éléments de contact (2, 10 ; 3, 10 ; 14, 10 ; 7, 10 ; 7, 5, 13, 10 ; 8, 10).

12. Procédé selon l'une des revendications précédentes, **caractérisé par** une analyse de corrélation, notamment un procédé à boucle à verrouillage de phase.

13. Dispositif d'injection (18 ; 18a ; 18b ; 18c) destiné à mesurer un interstice de lubrification (19) entre des éléments de contact (2, 10 ; 3, 10 ; 14, 10 ; 7, 10 ; 7, 5, 13, 10 ; 8, 10) lubrifiés, le dispositif d'injection (18 ; 18a ; 18b ; 18c) possédant au moins un élément d'injection, un générateur d'impulsions (21 ; 21d), un dispositif d'adaptation d'impédance (22) et une unité d'évaluation (23), un signal électrique destiné à mesurer un interstice de lubrification entre des éléments de contact (2, 10 ; 3, 10 ; 14, 10 ; 7, 10 ; 7, 5, 13, 10 ; 8, 10) lubrifiés pouvant être injecté par l'élément d'injection et le dispositif d'injection (18 ; 18a ; 18b ; 18c) étant conçu pour mettre en œuvre un procédé selon l'une des revendications 1 à 12.
